# EUROPEAN PATENT SPECIFICATION

(11) **EP 1 627 389 B1**
(45) Date of publication and mention of the grant of the patent: **02.11.2006**
(21) Application number: 04782320.8
(22) Date of filing: 26.08.2004
(51) Int. Cl.: G11B 23/40, G11B 23/42

(54) **OPTICAL DISK MODIFIED FOR SPEED AND ORIENTATION TRACKING**
FÜR GESCHWINDIGKEIT UND ORIENTIERUNGSVERFOLGUNG MODIFIZIERTER OPTISCHER DATENTRÄGER
DISQUE OPTIQUE MODIFIE EN VUE DU SUIVI DES VITESSES ET DE L'ORIENTATION

(30) Priority: 12.09.2003 US 661753
(43) Date of publication of application: 22.02.2006
(73) Proprietor: Hewlett-Packard Development Company, L.P., Houston, TX 77070 (US)
(72) Inventor: KOEGLER, John M., III, Corvallis, Oregon 97330 (US); VAN BROCKLIN, Andrew L., Corvallis, Oregon 97330 (US); ANDERSON, Daryl E., Corvallis, Oregon 97330 (US); MAGUIRE, Mark T., Loveland, Colorado 80537 (US)
(74) Representative: Jackson, Richard Eric
(86) International application number: PCT/US2004/027822
(87) International publication number: WO 2005/034125

(56) References cited:
- EP-A- 1 308 938
- WO-A-98/09895
- US-A- 5 611 066
- US-A- 5 646 920
- US-A- 6 041 703
- US-A1- 2002 030 705
- US-A1- 2003 133 005
- US-A1- 2003 156 531
- US-A1- 2003 161 224
- US-A1- 2004 141 045

## Description

### BACKGROUND

A CD has a long, spiraled data track, which may be approximately 3.5 miles in length. This continuous data track originates from the central portion of the disk and spirals to the outer portion of the disk. The data is formed by molding features on the top surface of a polycarbonate plastic disk. While the dimensions of such features may vary between CDs and DVDs, they may be approximately 0.5 to 1.2 microns across. The centerlines of adjacent rings of the long, continuous data spiral on the CD may be separated by approximately 1.6 microns. The data features within the continuous data spiral appear as "pits" when viewed from above, but are "bumps" when viewed from below. During the data-reading process, the bumps are viewed from below by the optical pick-up unit (OPU) of the optical disk drive. The upper surface of the polycarbonate plastic disk into which the pits are molded is covered with an aluminum layer, which in turn is covered with an acrylic layer, and ultimately, a label.

During the process of reading data off the CD, a drive motor spins the disk. The drive motor may precisely rotate the disk between 200 and 500 rpm, depending on if an outer or an inner portion of the spiral is being read, respectively. The angular speed at which data passes the OPU may be fine-tuned to maintain a consistent speed at which data is read by the OPU. For example, where data is being read at a rate which is too fast or slow, slight modifications to the spindle motor may be made in response, to more nearly approximate the desired rate of disk speed rotation. Such feedback can be used to gradually decrease the speed of disk rotation as locations on the track which are progressively further from the center of the disk are read.

A sled carrying the OPU, which typically includes a laser, a lens system and a sensor, moves from an inner location to an outer location, as data is read. A sled motor guides movement of the sled carrying the OPU so that the laser's beam can follow the spiral data track molded into the CD from a position below the portion of the spiral being read. Due to the extremely small dimensions of the data elements within the spiral, the precision of the tracking mechanism is important.

The sled motor will not, without assistance, achieve the accuracy required to adequately position the OPU under the desired portion of the data spiral. Accordingly, tracking sensors provide constant feedback to the sled motor. The feedback may be based on the sensor's observation of the precise location of the data track spiral.

Even with the tracking sensors, the accuracy of the tracking mechanism may not be entirely adequate. To bring the accuracy of the OPU within even greater tolerances, deflection sensors may be needed, to coordinate the operation of a deflection mechanism by which the laser of the OPU may be deflected slightly. If required, the deflection mechanism may aim the laser at a slight angle, thereby compensating for slight errors in the position of the sled carrying the OPU. Because the deflection sensors and associated circuitry move elements having much less mass than the sled through much smaller distances, the deflection mechanism is able to fine-tune the operation of the OPU.

While the OPU is typically used to read data from the optical disk, recent advancements have allowed the OPU to apply an image to a label of a CD to which an appropriate coating has been applied to the label. The image may be applied by turning the CD up-side-down and placing it in the CD drive. Because the CD is up-side-down, the coating may be activated by contact of the laser within the OPU. Application of the laser activates chemicals contained within the coating to result in formation of the image.

Unfortunately, during the process of applying an image to the label, the OPU is difficult to position accurately. The tracking sensors and deflection sensors are not operable, due to the absence, on the label surface of the disk, of a spiraling data track of the type that these sensors were designed to sense. Accordingly, the angular speed of disk rotation and the angular orientation of the disk are difficult to know and control with precision. As a result, any image applied by the OPU to the label surface may be distorted and flawed, or the resolution of the image may be less than desired, or both.

DVDs are similarly constructed, but typically have several layers of polycarbonate plastic upon which several layers of data are molded. Accordingly, application of an image to a label on a DVD involves many of the same problems seen in applying an image to a label of a CD.
Document US 2002/0030705 A discloses an optical disk comprising the features of the preamble of claim 1.

### SUMMARY

An optical disk comprises the features of claim 1.
A method of making an optical disk comprises the features of claim 4.

### BRIEF DESCRIPTION OF THE DRAWINGS

The following detailed description refers to the accompanying figures. In the figures, the left-most digit(s) of a reference number identifies the figure (Fig.) in which the reference number first appears. Moreover, the same reference numbers are used throughout the drawings to reference like features and components.

Fig. 1 is an isometric view of an optical disk, showing exemplary disk speed features and disk angular orientation features.

Fig. 2 is an orthogonal view of a second optical disk, showing further exemplary views of disk speed features and disk angular orientation features.

Fig. 3 is an enlarged view showing exemplary detail of a disk speed or an angular orientation feature having a "saw tooth" design.

Fig. 4 is a cross-section of the exemplary detail of Fig. 3, taken along the 4-4 lines of Fig. 3.

Fig. 5 is an enlarged view of a second exemplary disk speed and/or angular orientation feature.

Fig. 6 is a cross-sectional view of the exemplary detail of Fig. 5, taken along the 6-6 lines of Fig. 5.

Fig. 7 is schematic view of an exemplary optical disk drive, particularly showing an encoder configured to read the disk speed features and/or disk angular orientation features to allow calculation of disk speed and/or angular orientation, respectively.

Fig. 8 is flow chart showing an exemplary method by which an image may be applied to an optical disk configured with molded disk speed features and/or angular orientation features using an exemplary optical disk drive having an encoder.

Fig. 9 is a flow chart showing an exemplary method by which an optical disk having disk speed features and/or angular orientation features may be constructed.

### DETAILED DESCRIPTION

An optical disk is configured to allow application of an image to a label side of the disk. The disk includes features, which may be molded, silk screened or otherwise formed or applied, which provide disk orientation (i.e. the way the label side of the disk is oriented within an optical drive), rotational speed and angular orientation information (i.e. the direction a ray originating from the center of the disk and passing through a given point on the perimeter of the disk is pointed within the disk drive) during the image application process. The optical disk drive contains an encoder which monitors the features, thereby initially detecting disk orientation, and subsequently monitoring disk speed and angular orientation, thereby assisting in the application of the image to the label surface of the optical disk. In one exemplary implementation, disk speed relative to the OPU (i.e. the speed at which the media passes the OPU (optical pickup unit), resulting in a constantly varying RPM as the OPU moves radially outward) is held at 0.25 meters/second, to within +/- 0.02%, by a spindle motor. This allows image application with quarter-pixel precision at 600 dpi (dots per inch) yielding an effective resolution of 2400 dpi. In part because of spindle motor quality issues, and in part because the disk speed relative to the OPU is a function of the radial distance of the OPU, adjustments to the spindle motor may be required at intervals during each revolution to maintain the precision required.

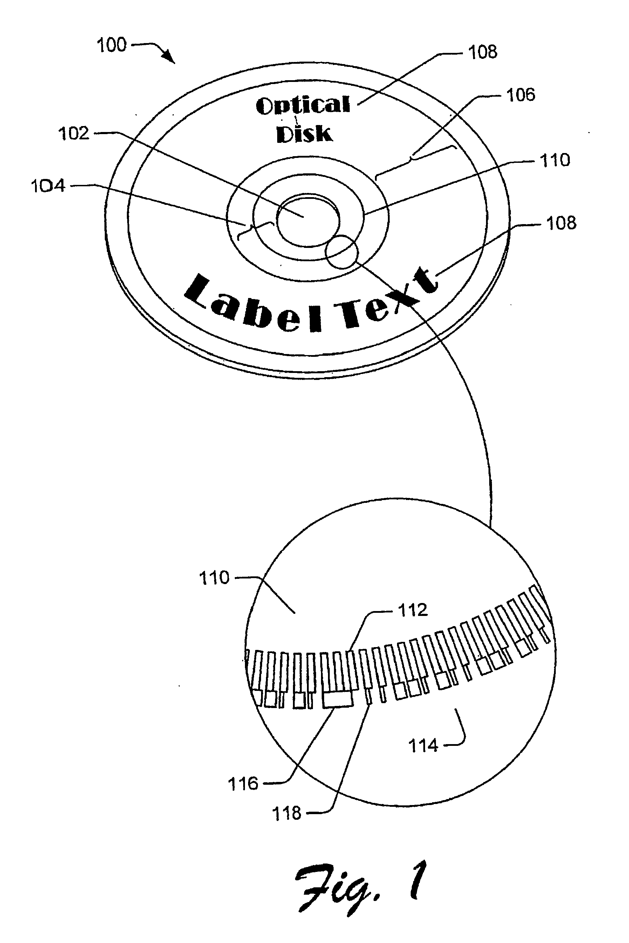

Fig. 1 is an isometric view of a first exemplary optical disk 100 configured for application of an image to an image or label side (generally, the side opposite a data side) of the disk. The disk 100 may be a CD, DVD or similar optical disk. A central hole 102 is surrounded by a region 104, which may or may not have mirrored appearance, depending on the manufacturing process. A label region 106 is coated with a material that is OPU-writable (i.e. writeable by an optical pick-up unit, as will be seen in greater detail, below). An image 108, such as text or graphics, may be applied to the label region 106 during the labeling process.

The labeling process can include reading features 110, which first provide information on disk orientation (i.e. which way is a given planar surface of the disk oriented within the disk drive), and then provide information on disk speed (angular or rotational speed, i.e. RPM) and disk angular orientation. In the exemplary optical disk 100, the features 110 are defined to allow observation while applying an image to the label side of the disk. Typically, the features are on the label side of the disk; however in alternate configurations, the features 110 could be defined on the data side of the disk, or on layers within the interior of the disk.

The features 110 of the exemplary optical disk 100 include a ring of disk speed features 112. When detected by an encoder (as will be seen below) the disk speed features 112 provide information on the speed of rotation of the optical disk 100. In the exemplary optical disk 100, the disk speed features 112 include molded areas spaced at intervals to provide a regular pattern of higher and lower light reflectivity. Exemplary detail of the structure of the molded disk speed features 112 is seen in Figs. 3―6, and will be discussed in greater detail, below. In one implementation, the disk speed features 112 are molded; in other implementations, the features could be printed, silk-screened onto the disk, or otherwise manufactured.

The features 11O of the exemplary optical disk 100 also include disk angular orientation features 114. When detected by an encoder (as will be seen below) the disk angular orientation features 114 provide information on the angular orientation (i.e. which direction a ray originating in the center of the disk and passing through a given point on the perimeter of the disk is pointed) of the optical disk 100 during rotation. The angular orientation of the disk is important as the image 108 is applied to the label region 106, since information about the angular orientation of the disk implies information about the angular orientation of the label region 106 during the image application process. In the exemplary disk 100, the disk angular orientation features 114 include molded areas spaced at intervals to provide an irregular pattern of higher and lower light reflectivity. Exemplary detail of the structure of molded features is seen in Figs. 3―6, and will be discussed in greater detail, below. Alternatively, the features 114 could be silk-screened or printed onto the disk, or otherwise manufactured.

The exemplary disk angular orientation features 114 of optical disk 100 include a larger feature 116 and smaller features 118 separated by flat, light-reflective areas of varying size. Because the pattern is irregular, and/or not symmetric about a number of radial axes, it is possible to determine the angular orientation of the disk 100 as it turns within an optical disk drive by observing the features 114. For example, where a single larger feature 116 and a plurality of smaller features 118 are present, the angular orientation of the disk may be readily determined.

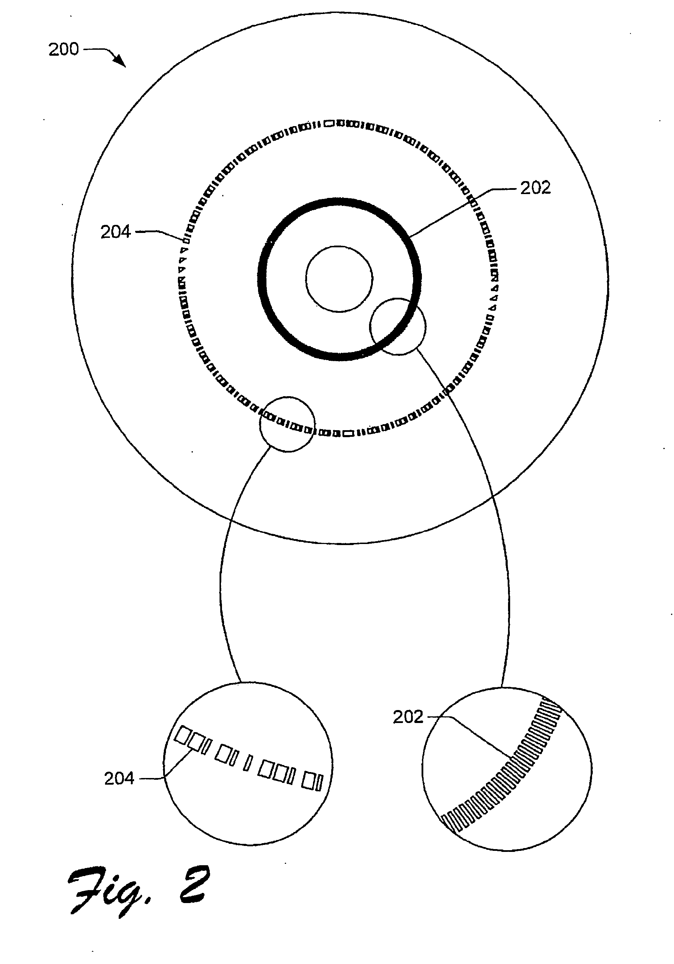

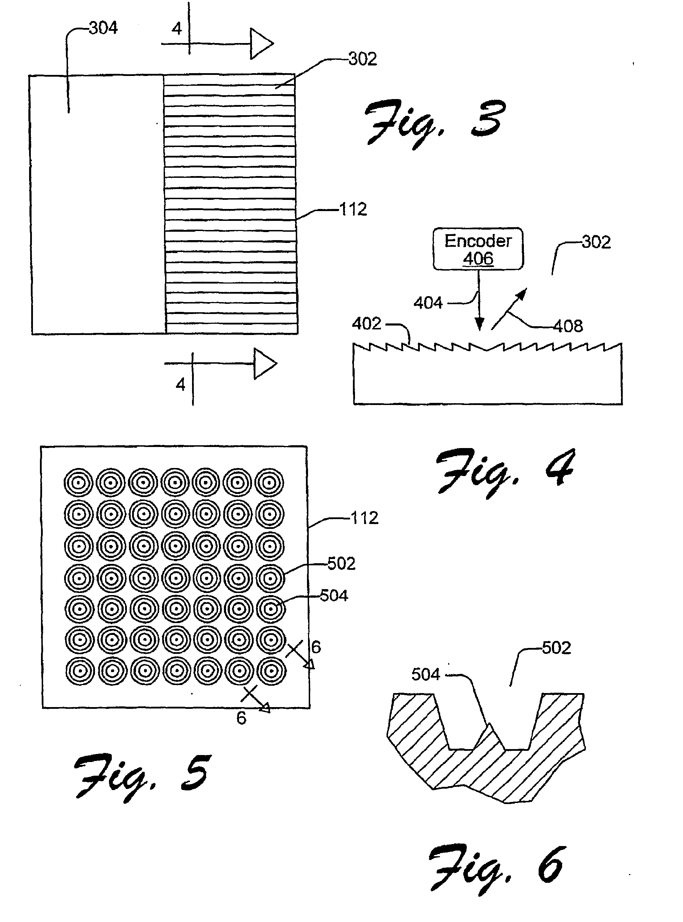

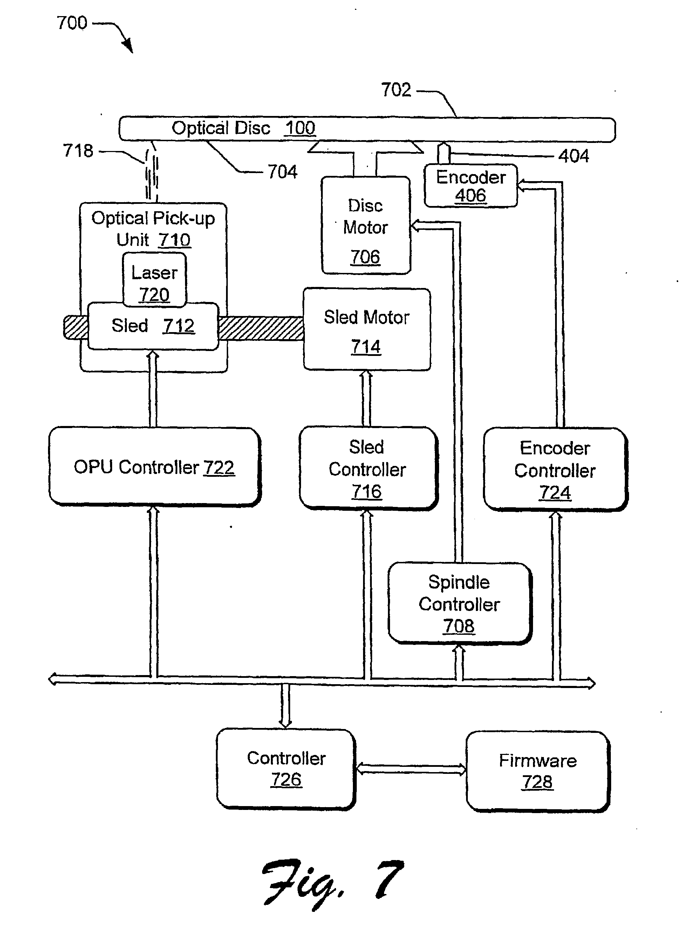

Fig. 2 is an orthogonal view of a second optical disk 200, showing further exemplary views of disk speed features 202 and disk angular orientation features 204. The disk angular orientation features 204 of the second disk 200 are typically suited for application to a DVD. In this case, the disk speed features 202 could be read by the encoder 406 (Fig. 4) and the disk angular orientation features 204 are readable by an OPU 710 (optical pick-up unit) of the optical disk drive 700 (as will be seen in the discussion of Fig. 7).

The disk speed features 202 are similar to the disk speed features 112 (Fig. 1), but may be molded on an inner layer of a multilayered DVD disk. The disk angular orientation features 204 may be similarly molded or made by a silk-screening or similar manufacturing process. The disk angular orientation features 204 may be annularly distributed at a location any desired radial distance from the center of the optical disk 200, radially inside or outside the disk speed features. While Figs. 1 and 2 provide exemplary disk speed and disk angular orientation features, other implementations are possible. For example, the disk speed features and disk angular orientation features may be combined into an annular ring of features having information present in both 202, 204.

Fig. 3 is an enlarged view showing detail of a first exemplary molded disk speed feature (e.g. 112 from Fig. 1) or a molded disk angular orientation feature (e.g. 116 or 118 from Fig. 1). For example, the exemplary molded features can resemble a saw tooth region 302, as shown. The saw tooth region 302 tends to disperse light, thereby greatly lessening the amount of reflected light. In contrast, a reflective region 304, having a planar surface, reflects light. The contrast between the amount of light reflected allows a sensor to distinguish between the saw tooth region 302 and the reflective region 304, as will be seen in greater detail below.

Fig. 4 shows a cross-sectional view of the saw tooth region 302 originally seen in Fig. 3. Such a saw tooth region may be used to form exemplary the molded disk speed or angular orientation features, such as the molded features 112, 116 or 118 of Fig. 1. Surfaces 402 of the saw tooth are not perpendicular to incoming light 404 sent by a sensor or encoder 406, and therefore tend to send reflected light 408 away from the encoder.

The sensor or encoder 406 of Fig. 4 may be based on optical, magnetic or other technology. In one implementation, the encoder 406 is configured to direct light at the optical disk 100, and to distinguish between less reflective regions such as the saw tooth surface 302 of a disk speed feature 112 and such as the molded disk angular orientation features 116, 118, and more reflective regions 304 adjacent or between these features. In one implementation, the encoder 406 may be located a fixed radial distance from the center of the disk 100, separate from a region which is readable and/or writeable by an optical pickup unit (OPU) (see Fig. 7). The encoder 406 may send conventional (i.e. incoherent, non-collimated, non-laser) light 404 or a laser (i.e. coherent, collimated light) at the surface of the disk 100, which is returned to the encoder upon reflection by the reflective surface 304, but wherein the reflection 408 is not substantially returned to the encoder 406 by the saw tooth region 302. Unlike conventional data pits, which are configured for operation only with laser (i.e. collimated or coherent) light, the surfaces are configured for deflection or conventional light, as well as laser light. Moreover, the surfaces 402 function by deflecting light, rather than by absorbing it, unlike technology utilizing contrast between light and dark colors. And further, a variety of lower-cost light sources may be incorporated for use within the encoder 406, and used in conjunction with the saw tooth surface 302.

Figs. 5 and 6 are schematics showing enlarged structural detail of a second exemplary molded disk speed or angular orientation feature 502, a plurality of which would be suitable for formation of features 112, 116, 118. The molded feature 502 may be defined within polycarbonate plastic forming a layer within a CD or DVD. The molded feature 502 may be a "pit" having a non-planar surface or light-deflecting feature 504 for deflection of light. In the example of Figs. 5 and 6, the light-deflecting feature 504 within the pit is a cone, but an alternate structure having a surface that is not perpendicular to incoming light could be substituted. The molded feature 502 (pit) may be scanned by an encoder 406 (as will be seen again in the discussion of Fig. 7), which sends light into the molded feature 502. Because the light-deflecting feature 504 does not reflect the light back to the encoder 406, the encoder signals a processor or controller accordingly.

Fig. 7 is schematic view of an exemplary optical disk drive 700, particularly showing an encoder 406 configured to read molded disk speed features 112 (Fig. 1) to allow calculation of disk speed. The encoder 406 may additionally be configured to read the disk angular orientation features 114 (Fig. 1). Alternatively, the OPU 710 may be used to read molded or silk-screened disk angular orientation features 204 (Fig. 2) located within a range within which the OPU may be operated, as seen below.

A disk 100 having an information side 702 is oriented to position the label side 704 for marking. The disk 100 is rotated by a disk or spindle motor 706, which is controlled by the spindle controller 708. An image is applied to the label area 106 (Fig. 1) of the disk 100 by an OPU 710 (optical pick-up unit). The OPU 710 is moved radially over the label area 106 on a sled 712 moved by a sled motor 714 and sled controller 716 or switching device. The image is applied to the label region 106 by the laser beam 718, which reacts the coating to form the image. A laser 720 producing the laser beam 718 is controlled by a controller 722 or similar switching device.

In the exemplary optical disk drive 700, the encoder 406 is typically able to read information on the disk that is radially inside or outside a region readable by the OPU (optical pick-up unit) 710. For example, the encoder 406 can read data features 110 (Fig. 1) which represent disk speed features and/or disk angular orientation features. Advantageously, the encoder 406 can read data from a first location on the optical disk 100 at the same time that the OPU 710 is reading or writing data on another part of the optical disk 100.

The encoder 406 reads data by sending light 404 (Fig. 4) to distinguish areas of molded features from areas without molded features by distinguishing between the quantities of reflected light. Exemplary molded features that may be read by the encoder are seen in Figs. 1―6. The reading process results in signals conveying disk orientation information, as well as disk speed and angular orientation information. The signals may be interpreted by an encoder controller 724, or transferred directly to a controller 726.

The controller 726 may execute software or firmware 728 to control the overall operation of the OPU 710, sled motor 714, spindle motor 706 and encoder 406. Firmware 728 code may configure the encoder 406 to read the molded disk speed features 112 and/or molded disk angular orientation features 114. Firmware code may also enable the OPU 710 to read disk angular orientation features 204 that are molded, printed and/or silk-screened onto the disk, typically within the label region 106.

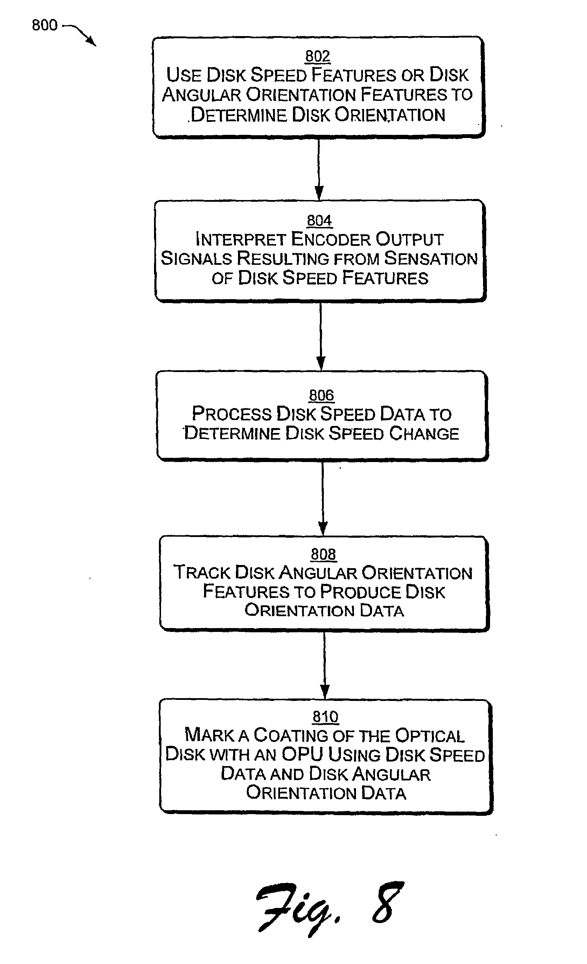

Fig. 8 is flow chart showing an exemplary method 800 by which an image may be applied to an optical disk 100 configured with molded and/or silk-screened features 110 (or 202, 204, etc.) to convey disk orientation information, disk speed information and/or disk angular orientation information using an exemplary optical disk drive having an encoder 406. The elements of method 800 may be implemented by a control procedure contained within firmware 728, or by other software executed by controller or processor 726. At block 802, disk speed features and/or disk angular orientation features are detected by an encoder 406 and/or an OPU 710. The detection of these features can be used to determine if the disk 100 is orientated properly in the optical disk drive 700, or whether the user should be asked to flip the disk over. At block 804, encoder output signals resulting from sensation of molded disk speed features 112 are interpreted, thereby producing disk speed data. The encoder 406 senses light reflected or not reflected from areas without and with disk speed features, and creates signals in response to the reflection detected or not detected. At block 806, the interpreted disk speed signals, i.e. the disk speed data, are used to increase or decrease disk speed by sending appropriate instructions to the disk motor 706. In general, where the OPU 710 is further from the center of the disk, the angular speed of the disk is maintained at a slower rate. Additionally, the interpreted disk speed signals are also used to determine OPU 710 operation during the label marking process. At block 808, disk angular orientation features 114 are tracked to produce disk angular orientation data. The disk angular orientation data, which provides information on the disk's angular orientation at any time, is used in the label marking process. The disk angular orientation features may be molded features 114 or possibly silk-screened features 204. The disk angular orientation features may be tracked by either the encoder 406 or the OPU 710. Blocks 806 and 808 define the functionality of a control procedure, typically located within firmware 728, which coordinates disk speed data from the encoder with the OPU during application of the image. At block 810, a coating on the label side of the optical disk is marked by the OPU 710. Laser light from the OPU 710 marks the coating by creating a reaction stimulated by heat and/or light exposure. The OPU uses the disk speed information from observation of the disk speed features 112 and disk angular orientation information from observation of the disk angular orientation features 114 to determine the correct times to turn on and off the laser 720 of the OPU, as well as to determine the correct operation of the sled motor 714 controlling the location of the OPU 710.

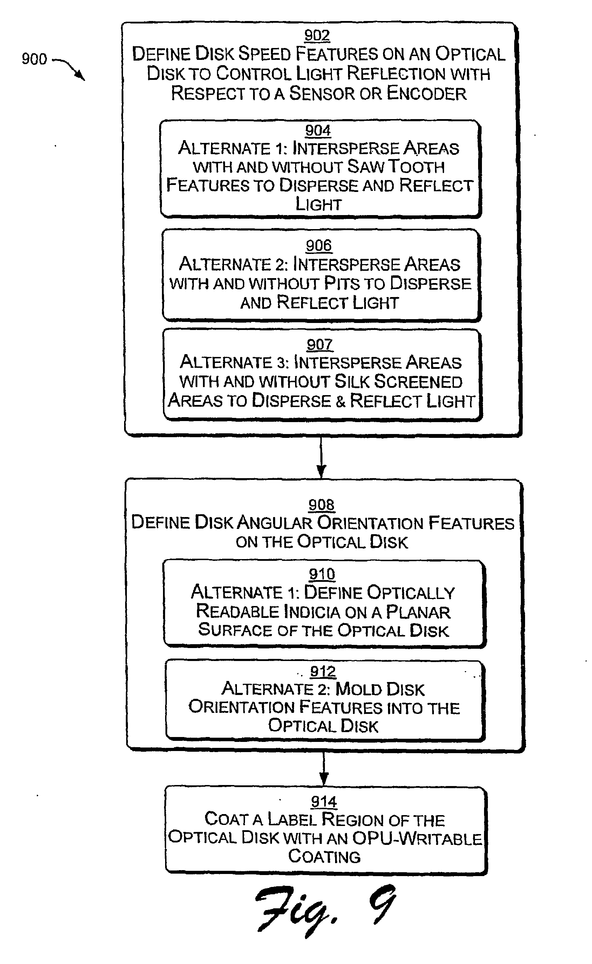

Fig. 9 is a flow chart showing an exemplary method 900 by which an optical disk 100 having disk speed features 112 and disk angular orientation features 114 may be constructed. The elements of method 900 may be implemented manually, or by a control procedure contained within software or firmware within a manufacturing facility. At block 902, disk speed features 112 are defined on an optical disk, typically to be read from a label side of the optical disk. Where the optical disk is multi-layered, such as a DVD, the disk speed features may be molded into an internal layer. In a first alternative, seen at block 904, the disk speed features 112 may be molded in the form of saw tooth features (e. g. 302 of Figs. 3 and 4). In a second alternative, seen at block 906, molded pits (e.g. 502 of Figs. 5 and 6) are interspersed with areas without molded features. In a third alternative, seen at block 907, silk screened areas are interspersed with area having no silk screen markings or features.

At block 908, disk angular orientation features, 114, 204 or similar, are defined, typically to be readable from the label side of the disk. In a first alternative, seen at block 910, optically readable indicia, such as silk-screened markings resembling features 204 may be defined, typically on an outer layer of the disk. In a second alternative, seen at block 912, disk angular orientation features are molded into the optical disk. For example, the disk angular orientation features 114, 204 may be molded into inner or outer layers of a DVD disk, or may be molded into a radially inner location in a CD or DVD disk for reading by the encoder 406.

At block 914, the label region of the label side of the optical disk may be coated with an OPU-writable material. For example, a thermally reactive coating may be applied, thereby allowing the OPU to apply an image by reacting the coating.

Although the disclosure has been described in language specific to structural features and/or methodological steps, it is to be understood that the appended claims are not limited to the specific features or steps described. Rather, the specific features and steps are exemplary forms of implementing this disclosure. For example, while actions described in blocks of the flow diagrams may be performed in parallel with actions described in other blocks, the actions may occur in an alternate order, or may be distributed in a manner which associates actions with more than one other block. And further, while elements of the methods disclosed are intended to be performed in any desired manner, it is anticipated that computer- or processor-readable instructions, performed by a computer and/or processor, typically located within a printer, reading from a computer- or processor-readable media, such as a ROM, disk or CD ROM, would be a preferred means of performing all or part of the methods. Additionally, while reference has been made to both CDs and DVDs, most of the elements described herein apply to disks generally, and optical disks particularly. Accordingly, the references to CDs and DVDs are by way of example only; such examples being are representative of larger and more general concepts, typically involving variations on, and/or improvements of, any type of disk, such as an optical disk (e.g. CD or DVD). And also, while disk speed features 112 and disk angular orientation features 114 have been illustrated as distinct markings, they could be combined, if desired, in some implementations. Such a combination may be more efficient in some applications.

## Claims

1. An optical disk (100), comprising:
a label region (106) on the optical disk (100) comprising a writeable material;
disk speed features (112), located to be readable when writing the label reg ion (106), to convey disk speed data; and
disk angular orientation features (114), located to be readable when writing to the label region (106), to convey disk angular orientation data;
**characterised in that** the disk speed features (112) and the disk angular orientation features (114) define annular rings.

2. The optical disk (100) of claim 1, wherein the disk angular orientation features (114) are defined in a mirror region (104) of the label side (704) of the optical disk (100).

3. The optical disk (100) of claim 1, wherein the disk angular orientation features (114) are molded.

4. A method of making an optical disk (100), comprising:
molding (902) an annular ring of disk speed features (112) configured to be viewed during labeling of the optical disk (100);
defining (908) an annular ring of disk angular orientation features (114) configured to be viewed during labeling of the optical disk (100); and
coating (914) a label region (106) on the label side (704) of the optical disk (100) with a coating writable by an optical pick-up unit.

5. The method of claim 4, wherein molding (904) disk speed features (112) comprises formation of a saw tooth feature (302).

6. The method of claim 4, wherein molding (906) disk speed features (112) comprises formation of areas of pits (502) interspersed with areas having no pits.

7. The method of claim 4 , wherein defining (908) the disk angular orientation features (114) comprises defining optically readable indicia on a planar surface of the optical disk (100).

8. The method of claim 4, wherein defining the disk angular orientation features (114) comprises molding disk angular orientation features (114) into the optical disk (100).

## Patentansprüche

1. Eine optische Platte (100), die folgende Merkmale aufweist:
eine Etikettregion (106) auf der optischen Platte (100), die ein beschreibbares Material aufweist;
Plattengeschwindigkeitsmerkmale (112), die angeordnet sind, um lesbar zu sein, wenn die Etikettregion (106) geschrieben wird, um Plattengeschwindigkeitsdaten zu übermitteln; und
Plattenwinkelausrichtungsmerkmale (114), die angeordnet sind, um lesbar zu sein, wenn auf die Etikettregion (106) geschrieben wird, um Plattenwinkelausrichtungsdaten zu übermitteln;
**dadurch gekennzeichnet, dass** die Plattengeschwindigkeitsmerkmale (112) und die Plattenwinkelausrichtungsmerkmale (114) ringförmige Ringe definieren.

2. Die optische Platte (100) gemäß Anspruch 1, wobei die Plattenwinkelausrichtungsmerkmale (114) in einer Spiegelregion (104) der Etikettseite (704) der optischen Platte (100) definiert sind.

3. Die optische Platte (100) gemäß Anspruch 1, bei der die Plattenwinkelausrichtungsmerkmale (114) geformt sind.

4. Ein Verfahren zum Herstellen einer optischen Platte (100), das folgende Schritte aufweist:
Formen (902) eines ringförmigen Rings von Plattengeschwindigkeitsmerkmalen (112), die konfiguriert sind, um während eines Etikettierens der optischen Platte (100) betrachtet zu werden;
Definieren (908) eines ringförmigen Rings von Plattenwinkelausrichtungsmerkmalen (114), die konfiguriert sind, um während eines Etikettierens der optischen Platte (100) betrachtet zu werden; und
Beschichten (914) einer Etikettregion (106) auf der Etikettseite (704) der optischen Platte (100) mit einer Beschichtung, die durch eine optische Aufnahmeeinheit beschreibbar ist.

5. Das Verfahren gemäß Anspruch 4, bei dem ein Formen (904) von Plattengeschwindigkeitsmerkmalen (112) eine Bildung eines Sägezahnmerkmals (302) aufweist.

6. Das Verfahren gemäß Anspruch 4, bei dem ein Formen (906) von Plattengeschwindigkeitsmerkmalen (112) eine Bildung von Bereichen von Vertiefungen (502) aufweist, die mit Bereichen durchsetzt sind, die keine Vertiefungen aufweisen.

7. Das Verfahren gemäß Anspruch 4, bei dem das Definieren (908) der Plattenwinkelausrichtungsmerkmale (114) ein Definieren von optisch lesbaren Vermerken auf einer planaren Oberfläche der optischen Platte (100) aufweist.

8. Das Verfahren gemäß Anspruch 4, bei dem das Definieren der Plattenwinkelausrichtungsmerkmale (114) ein Formen von Plattenwinkelausrichtungsmerkmalen (114) in die optische Platte (100) aufweist.

## Revendications

1. Disque optique (100), comprenant :
■ une région d'étiquette (106) sur le disque optique (100) comprenant une matière inscriptible ;
■ des particularités (112) de vitesse du disque, situées de manière à être lisibles lors de l'écriture de la région d'étiquette (106), afin de communiquer des données de vitesse du disque ; et
■ des particularités (114) d'orientation angulaire du disque, situées de manière à être lisibles lors de l'écriture de la région d'étiquette (106), afin de communiquer des données d'orientation angulaire du disque ;
**caractérisé en ce que** les particularités (112) de vitesse du disque et les particularités (114) d'orientation angulaire du disque définissent des bagues annulaires.

2. Disque optique (100) selon la revendication 1, dans lequel les particularités (114) d'orientation angulaire du disque sont définies dans une région de miroir (104) du côté étiquette (704) du disque optique (100).

3. Disque optique (100) selon la revendication 1, dans lequel les particularités (114) d'orientation angulaire du disque sont moulées.

4. Procédé de fabrication d'un disque optique (100), comprenant les étapes consistant à :
■ mouler (902) une bague annulaire de particularités (112) de vitesse du disque, configurée de manière à être visualisée pendant l'étiquetage du disque optique (100) ;
■ définir (908) une bague annulaire de particularités (114) d'orientation angulaire du disque, configurée de manière à être visualisée pendant l'étiquetage du disque optique (100) ; et
■ revêtir (914) une région d'étiquette (106), sur le côté étiquette (704) du disque optique (100), d'un revêtement inscriptible par une unité de capteur optique.

5. Procédé selon la revendication 4, dans lequel mouler (904) des particularités (112) de vitesse du disque comprend une étape de formation d'une particularité (302) de dents de scie.

6. Procédé selon la revendication 4, dans lequel mouler (906) des particularités (112) de vitesse du disque comprend une étape de formation de zones de puits (502) qui alternent avec des zones sans puits.

7. Procédé selon la revendication 4, dans lequel définir (908) les particularités (114) d'orientation angulaire du disque comprend une étape de définition de marquages lisibles optiquement sur une surface plane du disque optique (100).

8. Procédé selon la revendication 4, dans lequel définir les particularités (114) d'orientation angulaire du disque comprend une étape de moulage de particularités (114) d'orientation angulaire du disque dans le disque optique (100).
